# EUROPÄISCHE PATENTSCHRIFT

(11) **EP 0 699 571 B1**
(45) Veröffentlichungstag und Bekanntmachung des Hinweises auf die Patenterteilung: **01.12.1999**
(21) Anmeldenummer: 95112294.4
(22) Anmeldetag: 04.08.1995
(51) Int. Cl.: B60T 8/36

(54) **Blockierschutzeinrichtung für eine hydraulische Fahrzeugbremsanlage**
Anti-lock device for hydraulic vehicle brake system
Système anti-blocage pour système de freinage hydraulique pour véhicules

(30) Priorität: 02.09.1994 DE 4431250
(43) Veröffentlichungstag der Anmeldung: 06.03.1996
(73) Patentinhaber: ROBERT BOSCH GMBH, 70442 Stuttgart (DE)
(72) Erfinder: Rischen, Dietmar, Dipl.-Ing., D-71665 Vaihingen/Enz (DE); Pabst, Carsten, D-70499 Stuttgart (DE); Benzinger, Roland, Dipl.-Ing., D-70499 Stuttgart (DE); Krauter, Michael, Dipl.-Ing., Charleston, 2941 (US); Atsushi, Hiroaki, Dipl.-Ing., D-70569 Stuttgart (DE)

(56) Entgegenhaltungen:
- EP-A- 0 373 551
- WO-A-91/16220
- DE-A- 4 234 013
- DE-A- 4 311 263

## Beschreibung

### Stand der Technik

Die Erfindung geht aus von einer Blockierschutzeinrichtung nach der Gattung des Hauptanspruchs.

Durch die Druckschrift US 5,244,262 ist eine solche Blockierschutzeinrichtung für eine hydraulische Fahrzeugbremsanlage bekannt mit einem Gehäuseblock, der einen Exzenterraum für einen um eine Achse drehbaren Exzenter aufweist, mit zwei Pumpenkolben, die gleichachsig ausgerichtet spiegelbildlich zum Exzenter angeordnet und in Pumpenzylinderbohrungen verschiebbar sind, mit einem Motor zum Antreiben des Exzenters, wobei der Motor an einer ersten Seite des Gehäuseblockes befestigt ist, mit einer zweiten der ersten Seite des Gehäuseblockes gegenüberliegenden Seite, von der ausgehend parallel zur Drehachse des Exzenters elektrisch steuerbare Wegeventile zum Verändern von Radbremsdrücken eingebaut sind, mit zwei in Bohrungen befindlichen ersten Speicherkammern zur vorübergehenden Aufnahme von aus wenigstens einer Radbremse mittels eines Wegeventils abgelassenem Druckmittel, mit zwei zweiten in Bohrungen befindlichen Speicherkammern zur vorübergehenden Aufnahme von von den Pumpenkolben gepumptem Druckmittel, wobei verlängerte Längsachsen der ersten und der zweiten Speicherkammern parallel ausgerichtet sind und die Längsachsen der Pumpenkolben kreuzen, wobei die ersten und die zweiten Speicherkammern mit ihren verlängerten Längsachsen in einer gemeinsamen Bezugsebene liegend angeordnet sind. Anders ausgedrückt, die Speicherkammern sind unterhalb der beiden Pumpenkolben und deren Pumpenzylinderbohrungen in einer Reihe angeordnet und bestimmen in dieser Richtung die Abmessung des Gehäuseblockes aufgrund der Durchmesser der Bohrungen und von Wanddicken, die um diese Bohrungen herum notwendig sind. Die Durchmesser der vier Bohrungen sind abhängig von Volumenaufnahmen von Radbremsen während des Bremsens und auch abhängig davon, inwieweit bei Pumphüben der Pumpenkolben pulsweise geförderte Druckmittelmengen in ihrem Strom beispielsweise zu einem Hauptbremszylinder oder zurück zu einer Radbremse zu vergleichmäßigen sind. Daraus resultiert dann gegebenenfalls, daß bei der beschriebenen Anordnungsweise der Speicherkammern der Gehäuseblock der Blockierschutzeinrichtung sich nicht mehr dort im Fahrzeug unterbringen läßt, wo der Fahrzeugkonstrukteur einen gegebenenfalls zu schmalen Einbauraum vorgeplant hat oder zur Verfügung stellen kann. Die Unterbringung der Blockierschutzeinrichtung kann zusätzlich noch dadurch erschwert sein, daß sich hydraulische Anschlußbohrungen für Bremsleitungen auf zwei sich quer zu den Längsachsen der Pumpenkolben ausgerichteten Seiten des Gehäuseblockes befinden, so daß zum Einbauen in schmale Räume auch noch Bremsleitungsverschraubungen und Biegungen von Bremsleitungen unterzubringen sind.

Bei einer weiteren derartigen Blockierschutzeinrichtung, die durch die Druckschrift WO 93/08050 bekannt ist, sind die Speicher in gleichartiger Weise in einer Reihe unterhalb der Pumpenkolben und Pumpenzylinderbohrungen untergebracht. Unterschiedlich ist, daß Anschlußbohrungen für Bremsleitungen parallel zu einem den Exzenter antreibenden Motor ausgerichtet sind und sich oberhalb dieses Motors befinden. Dadurch ist der Anspruch auf eine Breite eines Einbauraumes vermindert, denn nunmehr bestimmen bezüglich der Breite lediglich die Durchmesser der Speicherkammern und die Dicken der diese umgebenden Wände die Abmessung der Blockierschutzeinrichtung. Dennoch kann auch eine in solcher Art ausgebildete Blockierschutzeinrichtung gegebenenfalls schwierig oder gar nicht in einem vom Fahrzeugkonstrukteur vorgeplanten Raum untergebracht werden.

Durch die DE 42 34 013 A1 ist eine die Gattung bildende Blockierschutzeinrichtung bekannt mit einem Gehäuseblock, der Bremsleitungsanschlußlöcher und von einer ersten Gehäuseblockseite ausgehend einen Exzenterraum aufweist, mit einem in dem Exzenterraum um eine Drehachse drehbar gelagerten Exzenter, mit zwei gleichachsig und spiegelbildlich zum Exzenter ausgerichteten und verschiebbaren Pumpenkolben von Pumpenelementen, mit einem Motor zum Antreiben des Exzenters, wobei der Motor gleichachsig zur Drehachse des Exzenters ausgerichtet an der ersten Gehäuseblockseite befestigt ist, mit einer der ersten Gehäuseblockseite gegenüberliegenden zweiten Gehäuseblockseite, von der ausgehend parallel zur Drehachse des Exzenters elektrisch steuerbare Wegeventile zum Verändern von Radbremsdrücken eingebaut sind, mit zwei in ersten Bohrungen befindlichen Speicherkammern zur vorübergehenden Aufnahme von von den Pumpenelementen gepumptem Druckmittel, mit in zweiten Bohrungen befindlichen zweiten Speicherkammern, wobei Verlängerungen von Längsachsen der ersten und der zweiten Speicherkammern parallel ausgerichtet sind und die Längsachsen der Pumpenkolben rechtwinklig kreuzen, wobei die Verlängerungen der Längsachsen der ersten Speicherkammern erste Abstände von den Längsachsen der Pumpenkolben und die Längsachsen der zweiten Speicherkammern zweite Abstände von den Längsachsen der Pumpenkolben haben. Dabei sind diese ersten und zweiten Abstände jeweils deutlich kleiner als die Hälften der Durchmesser der jeweils zugeordneten Speicherkammern. Auch die Summe aus einem ersten und einem zweiten Abstand ist kleiner als ein halber Durchmesser einer Speicherkammer. Demzufolge erscheinen mit Blick auf die Drehachse des Exzenters alle Speicherkammern nebeneinander mit Mindestabständen, so daß wie bei den zuvor erwähnten Blockierschutzeinrichtungen die in Längsrichtung der Pumpenelemente gemessene Gehäuseabmessung wenigstens so groß ist wie die Summe von vier Durchmessern von Speicherkammern. Deshalb ist auch die Unterbringung der Blockierschutzeinrichtung gemäß der DE 42 34 013 A1 gegebenenfalls schwierig oder gar nicht möglich.

Es stellte sich deshalb die Aufgabe, eine Blockierschutzeinrichtung derart zu verbessern, daß ihre Unterbringbarkeit begünstigt ist.

### Vorteile der Erfindung

Die erfindungsgemäße Blockierschutzeinrichtung für eine hydraulische Fahrzeugbremsanlage mit den kennzeichnenden Merkmalen des Anspruchs 1 hat den Vorteil, daß in Richtung der Längserstreckungen der Pumpenkolben gemessen der Gehäuseblock kleiner ausbildbar ist und deshalb beispielsweise leichter zwischen einer Raumwand und beispielsweise einem Fahrzeugantriebsmotor unterbringbar ist.

Durch die in den Unteransprüchen aufgeführten Maßnahmen sind vorteilhafte Weiterbildungen und Verbesserungen der im Hauptanspruch angegebenen Blockierschutzeinrichtung möglich. Die kennzeichnenden Merkmale des Anspruchs 2 ergeben weitgehend symmetrische Anordnungen der Speicher relativ zu einer durch die Drehachse des Exzenters gedachten Mittelebene des Gehäuseblockes, so daß beispielsweise die ersten Speicherkammern unter Verwendung von gleich geneigt gebohrten Verbindungskanälen den Pumpenzylindern und Aufnahmelöchern von Magnetventilen kommunizieren können. Dies vereinfacht die Ausbildung von einer Fertigungsstation zum Herstellen des Gehäuseblockes. Die kennzeichnenden Merkmale des Anspruchs 3 ergeben vorteilhaft kurze Entfernungen zwischen dem jeweils ersten und dem jeweils zweiten Speicher und dem zugeordneten Pumpenzylinder. Die kennzeichnenden Merkmale des Anspruchs 4 rücken die einzelnen Speicher gleich nahe an die oben genannte gedachte mittlere Ebene des Gehäuseblockes, was wiederum in Längsrichtung der Pumpenelemente gemessen eine günstige kleine Bauabmessung ergibt. Die kennzeichnenden Merkmale des Anspruchs 6 ergeben den Vorteil einer guten Entlüftbarkeit der Speicherkammern und der guten Zugänglichkeit von Bremsleitungsanschlußlöchern zum Zweck der Verschraubung mit Bremsleitungen. Die kennzeichnenden Merkmale des Anspruchs 7 ergeben den Vorteil, daß beispielsweise zwei Bremsleitungsanschlüsse von der Oberseite des Gehäuseblockes entfernt werden können mit dem Vorteil, daß beispielsweise vier verbliebene Anschlußbohrungen besser zugänglich sind zum Einsetzen von Verschraubungen und zum Festziehen der Verschraubungen mittels eines Gabelschlüssels. Die kennzeichnenden Merkmale des Anspruchs 8 ergeben den Vorteil, daß einerseits im Bereich unterhalb der Wegeventile ausreichend Gehäuseblockvolumen zur Unterbringung der Speicherkammern vorhanden ist und andererseits im Bereich der Wegeventile nur so viel Werkstoff angehäuft ist, wie zur Aufnahme der Wegeventile und zu deren Verbindung mit den Bremsleitungsanschlußlöchern notwendig ist. Die kennzeichnenden Merkmale des Anspruchs 9 ergeben den Vorteil, daß hydraulische und elektrische Bestandteile eine in einem Arbeitsgang in das Fahrzeug einsetzbare Baueinheit bilden. Die kennzeichnenden Merkmale des Anspruchs 10 ergeben den Vorteil, daß Elektromagnete der Magnetventile gemeinsam geschützt werden und gegebenenfalls gemeinsam auf die Wegeventile aufsteckbar sind. Die kennzeichnenden Merkmale des Anspruchs 11 ergeben eine raumsparende Unterbringung von elastischen Aufhängeelementen für den Gehäuseblock innerhalb des Umrisses dieses Gehäuseblockes.

Die Weiterbildung mit den kennzeichnenden Merkmalen des Anspruchs 12 ermöglicht es, automatische Bremsungen durchzuführen ohne Betätigung des Bremspedals eines Hauptbremszylinders. Je nach Ausbildung der unter der Abdeckhaube bzw. im Gehäuse angeordneten elektrischen und elektronischen Mittel kann das automatische Bremsen benützt werden zur Verringerung von Antriebsschlupf oder aber es kann radweise oder achsweise automatisch gebremst werden zur Erhöhung von seitlichem Schlupf des Rades oder der betreffenden Räder, um einer Drehung des Fahrzeugs um die Hochachse anläßlich des ursprünglich zu ungleichen seitlichen Schlupfes zwischen Vorder- und Hinterrädern durch Verkleinerung von seitlichem Schlupfunterschied entgegenzuwirken. Andererseits kann man auch seitenweise unterschiedlich hohe Bremsdrücke und dadurch unterschiedliche Bremskräfte erzeugen zu dem Zweck, daß man beispielsweise willkürlich das derart ausgerüstete Fahrzeug besser in eine Kurve hinein bzw. besser aus einer Kurve herausbringt.

Die kennzeichnenden Merkmale des Anspruchs 13 ergeben den Vorteil, daß wiederum gummielastische Elemente, die zur Aufhängung der weitergebildeten Blockierschutzeinrichtung vorgesehen sind, raumsparend in der Kontur des Gehäuseblockes Platz finden.

Die Blockierschutzeinrichtung mit den kennzeichnenden Merkmalen des Anspruchs 14 hat den Vorteil, daß durch die Auswahl der Länge der Säule die Entfernung des unteren gummiartigen Elementes von den beiden oberen gummiartigen Elementen gleich groß wird wie die entsprechende Entfernung bei der für das automatische Bremsen weitergebildeten Blockierschutzeinrichtung, die den höheren Gehäuseblock aufweist. Daraus ergibt sich wiederum der Vorteil, daß man in ein und dieselbe Halterung, die vom Fahrzeughersteller in das Fahrzeug eingebaut wird, je nach gewolltem Ausstattungsgrad des Fahrzeuges entweder die einfach ausgebildete Blockierschutzeinrichtung oder die weitergebildete Blockierschutzeinrichtung einsetzen kann.

### Zeichnung

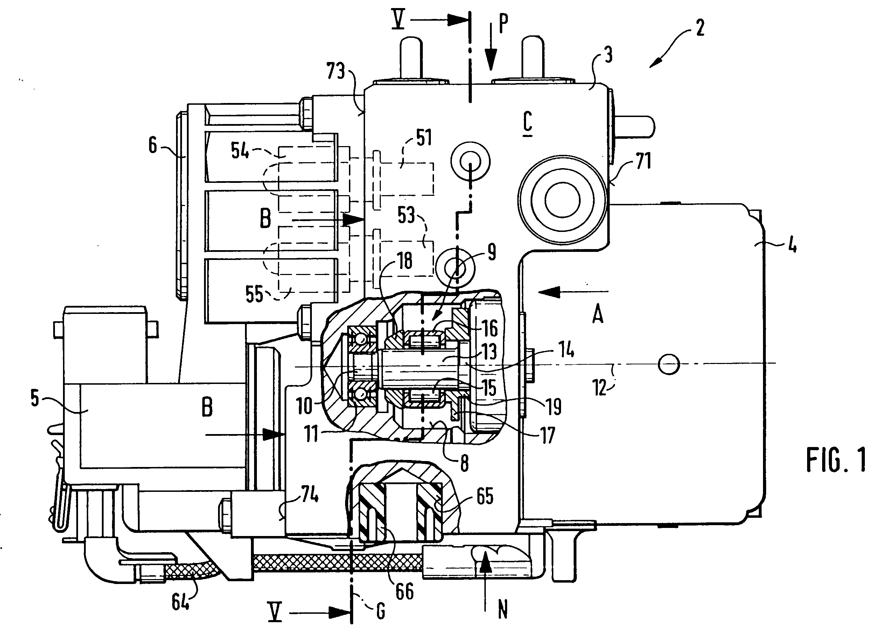

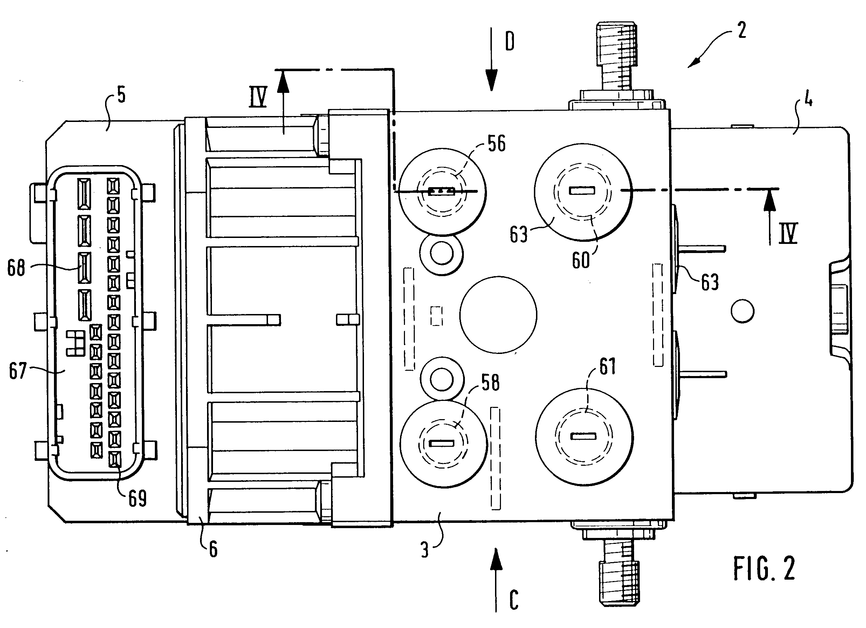

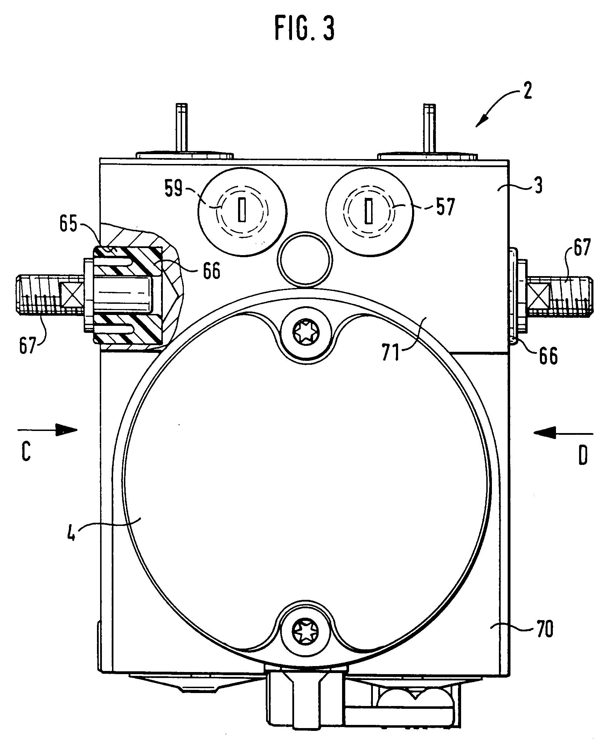

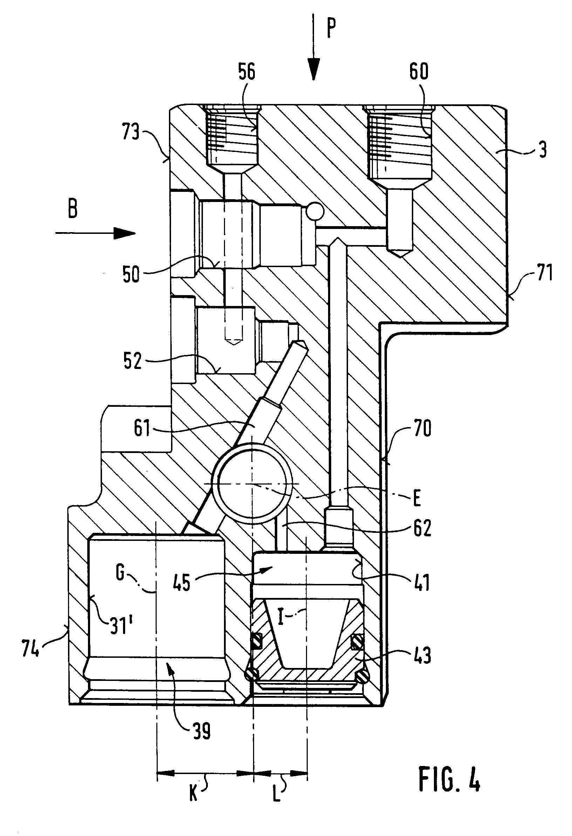

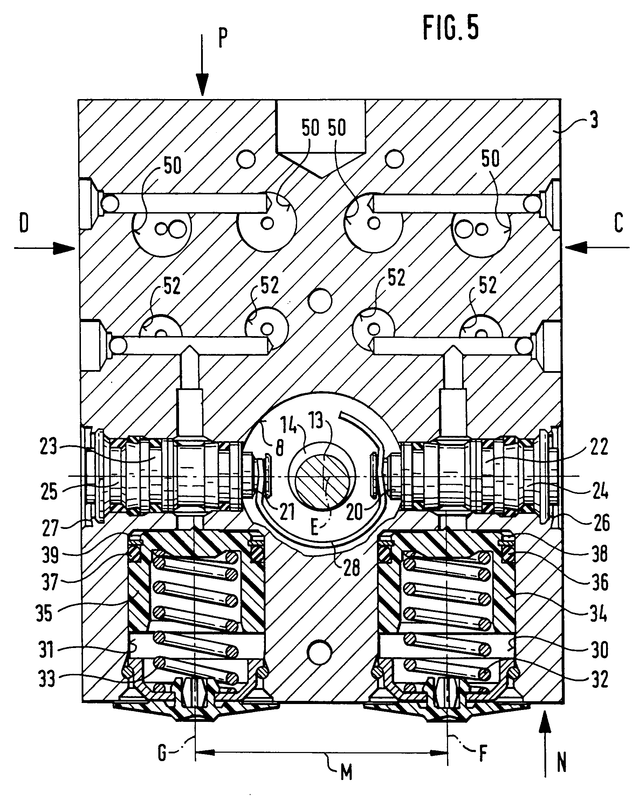

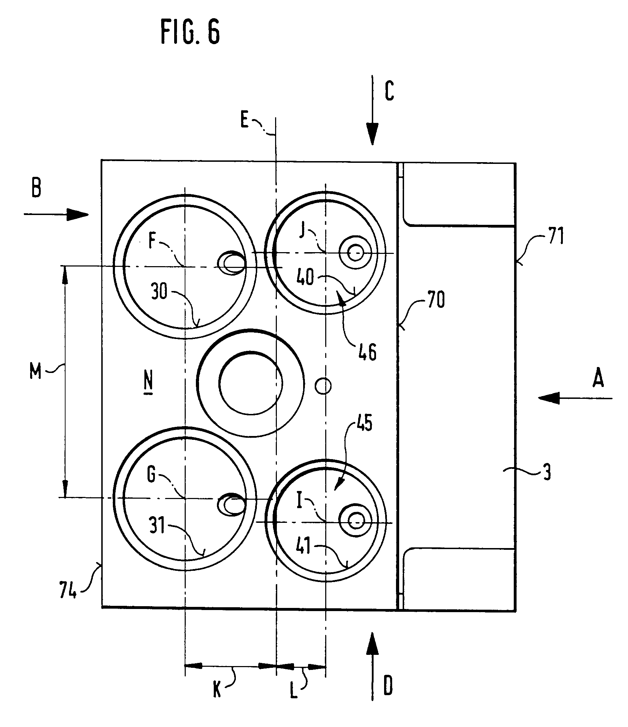

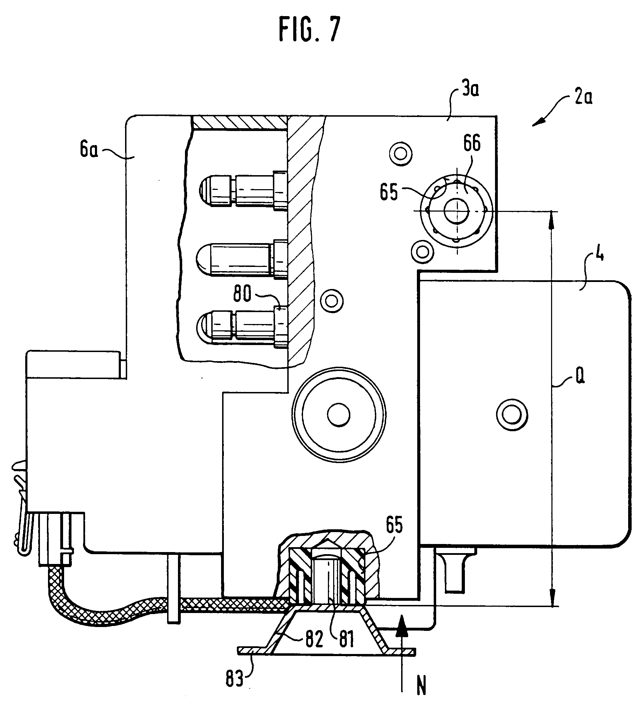

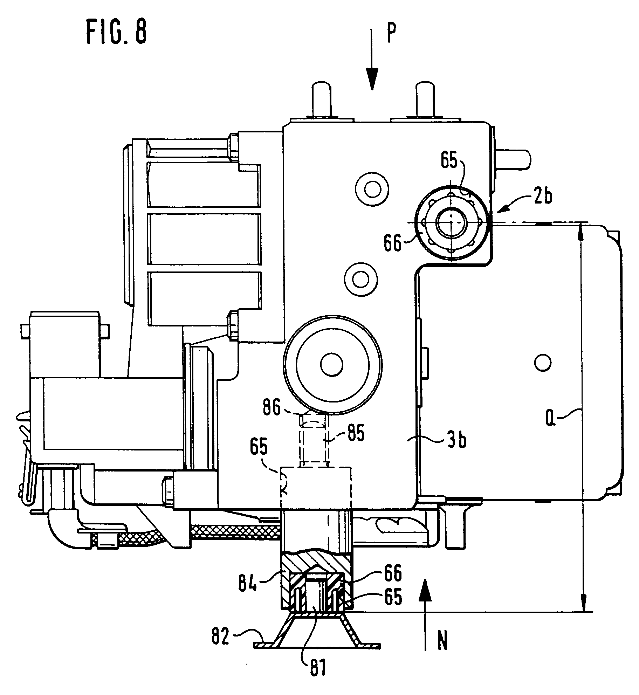

Ein Ausführungsbeispiel der erfindungsgemäßen Blockierschutzeinrichtung für eine hydraulische Fahrzeugbremsanlage ist in der Zeichnung dargestellt und in der nachfolgenden Beschreibung näher erläutert. Es zeigen Figur 1 die erfindungsgemäße Blockierschutzeinrichtung von einer Seite gesehen, Figur 2 die Blockierschutzeinrichtung gemäß der Figur 1 von oben gesehen, Figur 3 die erfindungsgemäße Blockierschutzeinrichtung gemäß der Figur 1 von einer zweiten Seite aus gesehen, die Figur 4 einen Längsschnitt durch einen Gehäuseblock der erfindungsgemäßen Blockierschutzeinrichtung gemäß der Figur 1, Figur 5 einen Querschnitt durch den Gehäuseblock der erfindungsgemäßen Blockierschutzeinrichtung gemäß der Figur 1, Figur 6 eine Unteransicht des erfindungswesentlichen Gehäuseblockes der Blockierschutzeinrichtung, Figur 7 eine Weiterbildung der erfindungsgemäßen Blockierschutzeinrichtung zusätzlich zum automatischen Bremsen und Figur 8 eine im Detail veränderte Gestaltung des Gehäuseblockes einer Blockierschutzeinrichtung gemäß der Figur 1.

### Beschreibung der Ausführungsbeispiele

Die erfindungsgemäße Blockierschutzeinrichtung 2 umfaßt als wesentliche Bauteile einen Gehäueblock 3 und an den Gehäuseblock 3 angesetzt einen Motor 4, ein Gehäuse 5 und eine Abdeckhaube 6.

Dabei ist die Blockierschutzeinrichtung 2 gemäß den Figuren 1 und 2 in einer bevorzugten Gebrauchslage dargestellt, d. h., daß in den Figuren 1 und 2 unten dargestellten Dinge auch im Fahrzeug nach unten eingebaut werden. Demgemäß gibt die Figur 2 an, wie die Blockierschutzeinrichtung von oben aussieht. Abweichend davon besteht natürlich auch die Möglichkeit, die Blockierschutzeinrichtung 2 in beliebige Richtungen gekippt bzw. geneigt einzubauen. Zur Vereinfachung der Beschreibung wird jedoch von der ungeneigt dargestellten Blockierschutzeinrichtung 2 gemäß den Figuren 1 und 2 ausgegangen.

Entsprechend dem vorangegangenen letzten Satz wird eine erste Seite des Gehäuseblockes 3 mit A bezeichnet. Parallel dazu ausgerichtet und gegenüberliegend ist eine zweite Seite mit B bezeichnet in der Figur 1. An der Seite A befindet sich für den Motor 4 eine Befestigungsfläche 7. Senkrecht zu dieser Befestigungsfläche 7 erstreckt sich in den Gehäuseblock 3 hinein eine gestufte Bohrung 8, die eine Exzenterkammer 9 umgrenzt. Ein Wellenzapfen 10, der mittels eines Kugellagers 11, das von der gestuften Bohrung 8 gestützt ist, bestimmt eine Drehachse 11 für einen Exzenter 13, der einstückig mit einer Welle 14 ausgebildet ist. Diese Welle 14 erstreckt sich von dem Exzenter 13 ausgehend hinein in den Motor 4. Der Motor 4 kann in einer nicht dargestellten Weise als ein Gleichstrommotor mit einem nicht dargestellten Anker und einem nicht dargestellten Kollektor sowie nicht dargestellten und dem Kollektor zugeordneten Kontaktbürsten ausgestattet sein. Da es bezüglich der später beanspruchten erfindungswesentlichen Merkmale nicht auf die innere Ausbildung des Motors ankommt, braucht der Motor im einzelnen nicht beschrieben zu werden; es braucht auch kein Gleichstrommotor zu sein.

Ein Querschnitt durch den Exzenter 13 ist in der Figur 5 dargestellt. In der Figur 5 ist auch die sich hinter dem Exzenter 13 anschließende Welle 14 erkennbar. Um den Exzenter 13 herum sind beispielsweise Nadellager 15 angeordnet, die von einem Lagerring 16 zusammengehalten werden. Beiderseits des Lagerringes 16 sind axiale Anschlagmittel 17, 18 für den Lagerring 16 vorgesehen. Der Lagerring 16 ist zwischen diesen axialen Anschlagmitteln 17 und 18 drehbar relativ zum Exzenter 13. Dabei hat das Anschlagmittel 17 eine Nabe 19, die fest auf der Welle 14 sitzt. Das axiale Anschlagmittel 18 ist in Form eines konischen Ringes ausgebildet und festsitzend auf den Exzenter 13 aufgepreßt. Die genannten Einzelteile sind in der Figur 1 dargestellt. Gemäß der Figur 5 sind quer zur Drehachse 12 des Exzenters 13 und dabei gleichachsig und spiegelbildlich zum Exzenter 13 zwei Pumpenkolben 20, 21 vorgesehen. Die Pumpenkolben 20, 21 sind verschiebbar in nicht dargestellten Pumpenzylinderbohrungen, die sich in den Pumpenzylindern 22 und 23 befinden. Die Pumpenzylinder 22 und 23 sind mit Auslaßventilen 24 bzw. 25 kombiniert und bilden so insgesamt zwei unabhängig voneinander wirksame Pumpenelemente. Diese Pumpenelemente 20, 22, 24 bzw. 21, 23, 25 sind beispielsweise mittels Verstemmungen 26, 27 im Gehäuseblock 3 fixiert. In ihren Längsrichtungen sind zur Druckerzeugung die Pumpenkolben 20 und 21 verschiebbar mittels des Exzenters 13 unter Zwischenschaltung der Lagernadeln 15 und des Lagerringes 16. Zur Verschiebung in die jeweils entgegengesetzte Richtung sorgt ein an den Pumpenkolben 20 und 21 festgehakter C-förmiger Federbügel 28. Im Bereich der Verstemmung 26 hat der Gehäuseblock 3 eine Seite C und gegenüberliegend eine Seite D. Die Seiten C und D sind als senkrecht ausgerichtet zu betrachten, und die Pumpenkolben 20, 21 liegen demgemäß in einer gemeinsamen waagerechten Achse E.

In der Figur 5 unterhalb der Pumpenelemente 20, 22, 24 bzw. 21, 23, 25 befinden sich erste Bohrungen 30, 31 mit demgemäß senkrechten Bohrungsachsen F und G. In den Bohrungen 30 und 31 sind von Druckfedern 32, 33 belastete Speicherkolben 34 bzw. 35 angeordnet. Dichtringe 36 bzw. 37 sorgen dafür, daß von der umgebenden Atmosphäre abdichtend getrennte erste Speicherkammern 38 und bzw. 39 zur Verfügung stehen zur vorübergehenden Aufnahme von aus nicht dargestellten Radbremsen während eines Blockierschutzbetriebs abgelassenem Druckmittel. Eine der Bohrung 31 entsprechende Bohrung 31' mit vergrößertem Durchmesser ist in der Figur 4 dargestellt. Dabei ist der Bohrungsachse G der Figur 4 eine Bohrung 31' zugeordnet. Der Einfachheit halber nicht dargestellt ist ein Speicherkolben, der sich vom Speicherkolben 35 durch einen vergrößerten Durchmesser unterscheidet. Auch in der Figur 4 ist die gemeinsame Achse E der Pumpenelemente 20, 22, 24 bzw. 21, 23, 25 dargestellt. In der Figur 1 fällt die Bohrungsachse G zusammen mit der strichpunktierten Linie des dort angegebenen Schnittverlaufes von V zu V. Von zwei zweiten Bohrungen ist in der Figur 4 lediglich die Bohrung 41 mit ihrer Bohrungsachse I dargestellt. In die Bohrung 41 ist ein Verschlußstück 43 eingesetzt, so daß von diesem Verschlußstück 43 und der Bohrung 41 eine von zwei zweiten Speicherkammern 45 umgrenzt ist.

In der Figur 4 ist zwischen der Achse E der Pumpenkolben 20, 21 und der Längsachse G der Bohrung 31' ein horizontaler Abstand K angegeben. In gleichartiger Weise ist zwischen der Achse E und der Längsachse I einer der zweiten Bohrungen 41 der horizontale Abstand L angegeben. Betrachtet man noch die Figur 5 und den dort in horizontaler Richtung angegebenen Abstand M, so ergibt sich, daß die ersten und die zweiten Speicherkammern mit den Längsachsen ihrer Bohrungen die Eckpunkte eines Vierecks durchdringen. Dabei kann das Viereck ein Trapez, ein Rechteck oder ein Quadrat und beispielsweise in die Ebene einer unteren Seite N des Gehäuseblocks 3 gedacht sein.

Die Figuren 4 und 5 zeigen obere Stufenbohrungen 50, die von der Seite B ausgehen und sich oberhalb des Exzenterraumes 9 befinden. In die oberen Stufenbohrungen 50 sind gemäß der Figur 1 Wegeventile 51 eingebaut. Unterhalb der oberen Stufenbohrungen 50 befinden sich untere Stufenbohrungen 52, in die weitere in der Figur 1 angedeutete Wegeventile 53 eingebaut sind. Damit die Wegeventile 51 und 53 elektrisch steuerbar sind, sind ihnen beispielsweise in der Figur 1 dargestellte Elektromagnetspulen 54, 55 aufgesteckt. Wie in der Figur 4 dargestellt, kommunizieren je eine obere Stufenbohrung 50 und eine untere Stufenbohrung 52 miteinander und zusätzlich mit einer Bremsleitungsanschlußbohrung 56, die sich in eine oben gelegene Seite P des Gehäuseblockes 3 öffnet. Ein anderes Paar aus einer oberen Stufenbohrung 50 und einer unteren Stufenbohrung 52 kommuniziert mit einer weiteren Bremsleitungsanschlußbohrung 57, die in der Figur 3 dargestellt ist. Im selben Sinne gibt es noch eine weitere Bremsleitungsanschlußbohrung 58 und eine weitere Bremsleitungsanschlußbohrung 59. Wie man in der Figur 4 erkennt, kommuniziert die obere Stufenbohrung 50 für ein oberes Wegeventil 51 auch noch mit einem weiteren Bremsleitungsanschluß 60, der sich zur oberen Seite P öffnet. Wie man des weiteren erkennt, kommuniziert diese Bremsleitungsanschlußbohrung 60 auch mit der zweiten Speicherkammer 45. Sinngemäß gibt es eine weitere Bremsleitungsanschlußbohrung 61 in der Figur 2. In der Figur 4 ist die untere Stufenbohrung 52 durch eine schräg ansteigende Bohrung 61 mit der Bohrung 31' einer ersten Speicherkammer 38 verbunden. Eine weitere Bohrung 62 geht von der zweiten Speicherkammer 45 aus und mündet zu einem zugeordneten Pumpenelement 23. Infolge der Verbindung der einzelnen Elemente untereinander ergibt sich die vorbekannte, im einleitenden Beschreibungsteil beschriebene Möglichkeit, von einem Hauptbremszylinder den Radbremseanschlußöffnungen 60 und 61 zugeführten Druck unbeeinflußt den Bremsleitungsanschlußbohrungen 56, 57, 58 und 59 und dadurch nicht dargestellten Radbremsen zuzuführen. Mittels wenigstens eines der Wegeventile 51 ist die jeweilige Radbremse vom Hauptbremszylinder isolierbar. Mittels des wenigstens einen Wegeventils 53 ist die nicht dargestellte Radbremse durch die schräg ansteigende Bohrung 61 mit der Bohrung 31' einer ersten Speicherkammer verbindbar, so daß durch Öffnen des Wegeventils 53 Bremsdruck abbaubar ist in die genannte Speicherkammer. Das dieser ersten Speicherkammer zugeordnete Pumpenelement 22 entleert diese Speicherkammer auf dem Umweg durch die zweite Speicherkammer 45 zurück zum Bremsleitungsanschluß 60 und dadurch auch zurück zum Hauptbremszylinder. In den Figuren 1, 2 und 3 sind die Bremsleitungsanschlußlöcher 56 bis 62 gestrichelt dargestellt, weil sie im fertigen Zustand der Blockierschutzeinrichtung auf dem Weg zu einem Kraftfahrzeughersteller mit Verschlußstöpseln 63 gegen das Eindringen von Schmutz gesichert sind.

In der Abdeckhaube 6 befinden sich nicht dargestellte Kontaktierungsmittel zum Versorgen der Elektromagnetspulen 54 und 55 mit Steuerströmen. Die Kontaktierungsmittel können beispielsweise ausgehen von einem nicht dargestellten Steuergerät. In dem Gehäuse 5 können weitere Steuermittel angeordnet sein, beispielsweise ein nicht gezeichnetes Relais zur Stromversorgung des Motors 4 einerseits über ein Kabel 64 und andererseits über den Gehäuseblock 3.

Damit die Blockierschutzeinrichtung 2 innerhalb eines Fahrzeugs elastisch aufhängbar ist, befinden sich in den Seiten C und D sacklochartige Ausnehmungen 65, in die buchsenähnliche gummielastische Elemente 66 eingesteckt sind. In die gummiartig elastischen Elemente 66 tauchen Aufhängebolzen 67 ein. Schließlich ist noch von der unteren Seite N ausgehend eine sacklochartige Bohrung 65 gebohrt, in die ebenfalls ein gummielastisches Element 66 eingesteckt ist. Insoweit ist die Blockierschutzeinrichtung 2 an drei Aufhängungspunkten mit den unter sich gleichen gummielastischen Elementen 66 elastisch nachgiebig aufgehängt und ausreichend lagegesichert. Zur elektrischen Verbindung mit nicht dargestellten Raddrehungssensoren, die dem Stand der Technik entnehmbar sind, und einer nicht dargestellten Spannungsquelle, wie eine Kraftfahrzeugbatterie, ist das Gehäuse 5 ausgebildet zur Aufnahme eines Steckers für einen nicht dargestellten Kabelbaum, und hierfür ist in das Gehäuse 5 eine Leiste 67 mit unterschiedlichen Steckkontakten 68, 69 integriert.

Wie es besonders gut aus der Figur 4 ersichtlich ist, hat der Gehäuseblock 3 eine Gestalt, die an den Buchstaben Z erinnert. Versetzt zu einer Fläche 70, die eine Befestigungsfläche für den Motor 4 ist, hat der Gehäuseblock 3 darüber eine parallel versetzte Fläche 71, von der die Bremsleitungsanschlußbohrungen 57 und 59 ausgehen. Gegenüberliegend dazu auf der Seite B hat der Gehäuseblock 3 für die Abdeckung 6 eine Fläche 73 und zur Anbringung des Gehäuses 5 eine weitere Fläche 74. Die beiden Flächen 73 und 74 sind ebenfalls parallel zueinander versetzt, wobei in der Figur 4 die Fläche 74 diejenige ist, die sich am weitesten nach links erstreckt und die Fläche 73 diejenige ist, die sich näher bei der gemeinsamen Achse E befindet. Die Verteilung dieser Flächen 70, 71, 73 und 74 ist ein erfindungswesentliches Merkmal, das eine raumsparende Gestaltung der Blockierschutzeinrichtung 2 ergibt.

Die Abstände der Längsachsen F, G, I, J relativ zu den gemeinsamen Längsachsen E der Pumpenkolben 20, 21 sind in der Figur 6, die eine Unteransicht des Gehäuseblockes 3 darstellt, besonders deutlich erkennbar. In der Figur 6 sind wiederum die horizontalen Abstände K und L zu finden. Des weiteren ist wiederzufinden der horizontale Abstand M, wie er in der Figur 5 den ersten Speicherkammern 38, 39 zugeordnet ist. Im Beispiel der Figur 6 sind die Achsen I und J der zweiten Speicherkammern 45, 46 und also die zugeordneten Bohrungen 40 und 41 weiter voneinander entfernt als die Bohrungen 30 und 31 der ersten Speicherkammern 38, 39. Deshalb ist ein von den Längsachsen F, G, I und J bestimmtes Rechteck hier ausgebildet als ein symmetrisches Trapez. Die Erfindung ist aber nicht auf die Anordnung auf Ecken eines Trapezes beschränkt, vielmehr kann der Konstrukteur nach seiner Wahl die Abstände zwischen den ersten Bohrungen 30, 31 und den zweiten Bohrungen 40, 41 gleich groß wählen, so daß die Längsachsen F, G, I und J entweder ein Rechteck oder ein Quadrat umgrenzen.

Die Blockierschutzeinrichtung 2a gemäß der Figur 7 unterscheidet sich von der Blockierschutzeinrichtung 2 gemäß der Figur 1 im wesentlichen dadurch, daß in einer weiteren horizontalen Ebene weitere Wegeventile 80 eingebaut sind. Zu diesem Zweck ist der Gehäuseblock 3a höher ausgebildet als der Gehäuseblock 3 gemäß der Figur 1. In an sich bekannter Weise werden die zusätzlichen Wegeventile 80 dazu benützt, automatisch Bremsdrücke bereitzustellen, also zu bremsen, wenn der Fahrer keine Bremsung beabsichtigt oder eingeleitet hat. Wie bereits im angegebenen Stand der Technik enthalten, kann dieses automatische Bremsen der Antriebsschlupfregelung von antreibbaren Kraftfahrzeugrädern dienen. Ein Beispiel für die hydraulische Verkettung aller Wegeventile untereinander ist im genannten Stand der Technik enthalten, so daß es hier keiner näheren Erläuterung bedarf.

In gleicher Weise wie beim Ausführungsbeispiel gemäß der Figur 1 ist in der Weiterbildung gemäß der Figur 7 von der Unterseite N her ebenfalls eine sacklochartige Ausnehmung 65 in dem Gehäuseblock 3a vorgesehen. Diese sacklochartige Ausnehmung 65 nimmt ebenfalls ein gummielastisches Element 66 auf. In einem damit auszurüstenden Fahrzeug sind der unteren gummiartig elastischen Element 66 im Fahrzeug ein in das gummiartige Element 66 eintauchender Zapfen 81 und ein beispielsweise aus Blech geformter Sockel 82 zugeordnet. Beispielsweise hat der Sockel 82 einen ringförmigen Flansch 83, der mit einer nicht dargestellten Wand oder einem Boden des Fahrzeugs verschweißt sein kann. Der Zapfen 81 kann stumpf gegen den Sockel 82 geschweißt sein beispielsweise durch elektrisches Widerstandsschweißen oder durch Reibschweißung.

Der Sockel 82 und sein Zapfen 81 können auch verwendet werden in Verbindung mit dem Ausführungsbeispiel gemäß der Figur 1.

Für den Fall, daß ein und derselbe Karosserietyp unterschiedlich ausgestattet werden soll, nämlich einmal mit einer Blockierschutzeinrichtung, wie sie im grundsätzlichen und mit der gleichen Funktion dem Aufbau der Figur 1 entspricht, und das andere Mal mit einer weitergebildeten Blockierschutzeinrichtung 2a gemäß der Figur 7, so kann man den Sockel 82 in einer für die weitergebildete Blockierschutzeinrichtung 2a gemäß der Figur 7 bestimmten Weise in der Karosserie befestigen und die nicht weitergebildete Blockierschutzeinrichtung mit einer Säule 84 kombinieren. Die Säule 84 hat von ihrer Unterseite her ebenfalls wieder eine im wesentlichen sacklochartige Ausnehmung 65, in die wiederum ein gummielastisches Element 66 eingesteckt ist. Beispielsweise kann die Säule 84 mit einer dazu angepaßten Blockierschutzeinrichtung 2b verschraubt sein. Zu diesem Zweck kann die Säule 84 einen Gewindezapfen 85 aufweisen, dem im veränderten Gehäuseblock 3b ein Gewindeloch 86 zugeordnet ist. Diese Gewindeloch 86 kann sich beispielsweise anschließen an eine sacklochartige Ausnehmung 65, die aus dem Gehäuseblock 3 übertragbar ist.

Im montierten Zustand befindet sich zwischen dem Sockel 82 und den paarweisen Ausnehmungen 65 ein vertikaler Abstand Q. Zur Verdeutlichung des Erfindungsgedankens ist dieser vertikale Abstand Q auch in die Figur 7 der weitergebildeten Blockierschutzeinrichtung 2a mit dem höheren Gehäuseblock 3a eingezeichnet. Das oben beschriebene Ausführungsbeispiel eines Gehäuseblockes 3b hat dann noch den Vorteil, daß die zugeordnete Blockierschutzeinrichtung 2b entweder ohne oder mit der Säule 84 in eine Karosserie einbaubar ist.

## Patentansprüche

1. Blockierschutzeinrichtung (2, 2a) für eine hydraulische Fahrzeugbremsanlage mit einem Gehäuseblock (3, 3a) , der Bremsleitungsanschlußlöcher (56, 58, 60, 61) und von einer ersten Gehäuseblockseite (A) ausgehend einen Exzenterraum (9) aufweist, mit einem in dem Exzenterraum (9) um eine Drehachse drehbar gelagerten Exzenter (13), mit zwei gleichachsig und spiegelbildlich zum Exzenter (13) ausgerichteten und verschiebbaren Pumpenkolben (20, 21) von Pumpenelementen (22, 23), mit einem Motor (4) zum Antreiben des Exzenters (13), wobei der Motor (4) gleichachsig zur Drehachse des Exzenters (13) ausgerichtet an der ersten Gehäuseblockseite (A) befestigt ist, mit einer der ersten Gehäuseblockseite (A) gegenüberliegenden zweiten Gehäuseblockseite (B), von der ausgehend parallel zur Drehachse des Exzenters (13) elektrisch steuerbare Wegeventile (51, 53, 80) zum Verändern von Radbremsdrücken eingebaut sind, mit zwei in ersten Bohrungen (30, 31, 31') befindlichen ersten Speicherkammern (38, 39) zur vorübergehenden Aufnahme von von den Pumpenelementen (22, 23) gepumptem Druckmittel, mit in zweiten Bohrungen (40, 41) befindlichen zweiten Speicherkammern (45, 46), wobei Verlängerungen von Längsachsen (F, G, I, J) der ersten (38, 39) und der zweiten Speicherkammern (45, 46) parallel ausgerichtet sind und die Längsachsen (E) der Pumpenkolben (20, 21) rechtwinklig kreuzen, wobei die Verlängerungen der Längsachsen (F, G) der ersten Speicherkammern (38, 39) erste Abstände (K) von den Längsachsen (E) der Pumpenkolben (20, 21) und die Längsachsen (I, J) der zweiten Speicherkammern (45, 46) zweite Abstände (L) von den Längsachsen (E) der Pumpenkolben (20, 21) haben, dadurch gekennzeichnet, daß der Gehäuseblock (3) auf der zweiten Gehäuseblockseite (B) im Bereich der Wegeventile (51, 53) eine erste senkrechte Fläche (73) mit einem ersten horizontalen Abstand zur gemeinsamen Längsachse (E) der Pumpenkolben (20, 21) und unterhalb dieser eine zweite Fläche (74) mit wenigstens einer der Höhe der ersten Speicherkammern (38, 39) entsprechenden Höhe aufweist mit einem zweiten horizontalen Abstand zur gemeinsamen Längsachse (E) der Pumpenkolben (20, 21), der größer als der erste Abstand ist, daß die Längsachsen (F, G) der ersten Speicherkammern (38, 39) in einer ersten Bezugsebene und die Längsachsen (I, J) der zweiten Speicherkammern (45, 46) in einer zweiten Bezugsebene liegen und daß ein Abstand zwischen diesen beiden Bezugsebenen in Bereichen der Speicherkammern (38, 45, 39, 46) wenigstens so groß ist wie der Durchmesser der im Durchmesser kleinsten der Speicherkammern (38, 39, 45, 46).

2. Blockierschutzeinrichtung nach Anspruch 1, dadurch gekennzeichnet, daß die ersten Abstände (K) unter sich gleich sind, und daß die zweiten Abstände (L) unter sich gleich sind.

3. Blockierschutzeinrichtung nach Anspruch 1 oder 2, dadurch gekennzeichnet, daß die Längsachsen (E) der Pumpenkolben (21, 22) zwischen den Längsachsen (G, I) einer ersten und einer zweiten Speicherkammer (39) liegen.

4. Blockierschutzeinrichtung nach einem der Ansprüche 1 bis 3, dadurch gekennzeichnet, daß eine Projektion der Längsachsen (F, G, I, J) der vier Speicherkammern (38, 39, 45, 46) vier Eckpunkte eines symmetrischen Vierecks bestimmen.

5. Blockierschutzeinrichtung nach Anspruch 4, dadurch gekennzeichnet, daß die vier Eckpunkte zu einem Rechteck gehören.

6. Blockierschutzeinrichtung nach einem der Ansprüche 1 bis 5, dadurch gekennzeichnet, daß die Seite (N) des Gehäuseblocks (3), von der die Bohrungen (30, 31, 31', 41) ausgehen, eine Unterseite des Gehäuseblocks (3) bilden, und daß Bremsleitungsanschlußlöcher (56, 58, 60, 61) sich auf einer Oberseite (P) des Gehäuseblocks (3) befinden.

7. Blockierschutzeinrichtung nach Anspruch 6, dadurch gekennzeichnet, daß die erste Seite (A) des Gehäuseblocks (3) eine dem Motor (4) zugeordnete Befestigungsfläche (70) aufweist, und daß oberhalb des Motors (4) eine weitere Fläche (71) vorhanden ist, die relativ zur Befestigungsfläche (70) des Motors (4) parallel in Richtung eines freien Endes des Motors (4) versetzt ist und von der weitere Bremsleitungsanschlußlöcher (57, 59) ausgehen.

8. Blockierschutzeinrichtung nach Anspruch 7, dadurch gekennzeichnet, daß an der unteren Fläche (74) zur Aufnahme elektrischer und/oder elektronischer Bauteile ein Gehäuse (5) angeordnet ist.

9. Haltevorrichtung nach Anspruch 7, dadurch gekennzeichnet, daß an die obere Fläche (73) eine Abdeckhaube (6) angebaut ist, die zumindest Elektromagnetspulen (54, 55) der Wegeventile (51, 53) überdeckt.

10. Blockierschutzeinrichtung nach einem der Ansprüche 1 bis 9, dadurch gekennzeichnet, daß parallel zu den Längsachsen (E) der Pumpenkolben (20, 21) und dabei oberhalb einer Längsachse des Motors (4) der Gehäuseblock (3) auf zwei gegenüberliegenden Seiten (C, D) zwei und auf einer Unterseite (N) eine weitere sacklochartige Ausnehmung (65) für je ein gummiartig elastisches Element (66) zum Aufhängen der Blockierschutzeinrichtung (2, 2a) aufweist.

11. Blockierschutzeinrichtung nach Anspruch 1, dadurch gekennzeichnet, daß die Blockierschutzeinrichtung (2a) weitergebildet ist zum automatischen Bremsen durch zusätzlich eingebaute elektrisch steuerbare Wegeventile (80) und einem hierfür ausgebildeten Gehäuseblock (3a).

12. Blockierschutzeinrichtung nach Anspruch 11, dadurch gekennzeichnet, daß parallel zu den Längsachsen (E) der Pumpenkolben (20, 21) und dabei oberhalb der Längsachse (8) des Motors (4) auf zwei gegenüberliegenden Seiten des Gehäuseblocks (3a) sacklochartige Ausnehmungen (65) für gummiartig elastische Aufhängeelemente (66) und von der Unterseite (N) ausgehend eine weitere Ausnehmung (65) für ein weiteres gummielastisches Element (66) vorgesehen sind.

13. Blockierschutzeinrichtung nach einem der Ansprüche 1 bis 9, dadurch gekennzeichnet ,daß parallel zu den Längsachsen (E) der Pumpenkolben (20, 21) und dabei oberhalb der Längsachse des Motors (4) auf zwei gegenüberliegenden Seiten (C, D) des Gehäuseblocks (3b) sacklochartige Ausnehmungen (65) zur Aufnahme gummielastischer Elemente (66) angeordnet sind, daß von einer unteren Seite (N) her eine Säule (84) mit dem Gehäuseblock (3b) verbunden ist, und daß die Säule (84) unten eine sacklochartige Ausnehmung (65) zur Aufnahme eines dritten gummielastischen Elementes (66) hat.

## Claims

1. Anti-lock device (2, 2a) for a hydraulic vehicle brake system, with a housing block (3, 3a) which has brake-conduit connecting holes (56, 58, 60, 61) and, starting from a first housing block side (A), an eccentric space (9), with an eccentric (13) rotatably mounted about an axis of rotation in the eccentric space (9), with two displaceable pump pistons (20, 21) of pump elements (22, 23), which pistons are oriented coaxially and mirror-symmetrically to the eccentric (13), with a motor (4) for driving the eccentric (13), the motor (4) being fastened, oriented coaxially to the axis of rotation of the eccentric (13), to the first housing block side (A), with a second housing block side (B) which is located opposite the first housing block side (A) and starting from which electrically controllable directional valves (51, 53, 80) for the variation of wheel brake pressures are installed parallel to the axis of rotation of the eccentric (13), with two first storage chambers (38, 39), located in first bores (30, 31, 31'), for the temporary reception of pressure medium pumped by the pump elements (22, 23), with second storage chambers (45, 46) located in second bores (40, 41), extensions of longitudinal axes (F, G, I, J) of the first (38, 39) and of the second storage chambers (45, 46) being oriented in parallel and intersecting the longitudinal axes (E) of the pump pistons (20, 21) at right angles, the extensions of the longitudinal axes (F, G) of the first storage chambers (38, 39) being at first distances (K) from the longitudinal axes (E) of the pump pistons (20, 21) and the longitudinal axes (I, J)) of the second storage chambers (45, 46) being at second distances (L) from the longitudinal axes (E) of the pump pistons (20, 21), characterized in that the housing block (3) has on the second housing block side (B), in the region of the directional valves (51, 53), a first vertical surface (73) with a first horizontal distance from the common longitudinal axis (E) of the pump pistons (20, 21) and, underneath this, a second surface (74) having at least a height corresponding to the height of the first storage chambers (38, 39) and with a second horizontal distance from the common longitudinal axis (E) of the pump pistons (20, 21) which is greater than the first distance, in that the longitudinal axes (F, G) of the first storage chambers (38, 39) lie in a first reference plane and the longitudinal axes (I, J) of the second storage chambers (45, 46) lie in a second reference plane, and in that a distance between these two reference planes in regions of the storage chambers (38, 45, 39, 46) is at least as great as the diameter of the storage chambers (38, 39, 45, 46) which have the smallest diameter.

2. Anti-lock device according to Claim 1, characterized in that the first distances (K) are identical to one another, and in that the second distances (L) are identical to one another.

3. Anti-lock device according to Claim 1 or 2, characterized in that the longitudinal axes (E) of the pump pistons (21, 22) are located between the longitudinal axes (G, I) of a first and of a second storage chamber (39).

4. Anti-lock device according to one of Claims 1 to 3, characterized in that a projection of the longitudinal axes (F, G, I, J) of the four storage chambers (38, 39, 45, 46) determines four corner points of a symmetrical quadrangle.

5. Anti-lock device according to Claim 4, characterized in that the four corner points belong to a rectangle.

6. Anti-lock device according to one of Claims 1 to 5, characterized in that the side (N) of the housing block (3), from which the bores (30, 31, 31', 41) start, forms an underside of the housing block (3), and in that brake-conduit connecting holes (56, 58, 60, 61) are located on an upper side (P) of the housing block (3).

7. Anti-lock device according to Claim 6, characterized in that the first side (A) of the housing block (3) has a fastening surface (70) assigned to the motor (4), and in that there is above the motor (4) a further surface (71) which is offset relative to the fastening surface (70) of the motor (4) in parallel in the direction of a free end of the motor (4) and from which further brake-conduit connecting holes (57, 59) start.

8. Anti-lock device according to Claim 7, characterized in that a housing (5) is arranged on the lower surface (74) for receiving electric and/or electronic components.

9. Anti-lock device according to Claim 7, characterized in that a cover cap (6), which covers at least electromagnetic coils (54, 55) of the directional valves (51, 53), is mounted on the upper surface (73).

10. Anti-lock device according to one of Claims 1 to 9, characterized in that, parallel to the longitudinal axes (E) of the pump pistons (20, 21) and at the same time above a longitudinal axis of the motor (4), the housing block (3) has, on two opposite sides (C, D), two and, on a lower side (N), a further blindhole-like recess (65), each for an elastomeric element (66) for the suspension of the anti-lock device (2, 2a).

11. Anti-lock device according to Claim 1, characterized in that the anti-lock device (2a) is developed for automatic braking by means of additionally installed electrically controllable directional valves (80) and a housing block (3a) designed for this purpose.

12. Anti-lock device according to Claim 11, characterized in that, parallel to the longitudinal axes (E) of the pump pistons (20, 21) and at the same time above the longitudinal axis (8) of the motor (4) on two opposite sides of the housing block (3a), blindhole-like recesses (65) are provided for elastomeric suspension elements (66) and, starting from the lower side (N), a further recess (65) is provided for a further elastomeric element (66).

13. Anti-lock device according to one of Claims 1 to 9, characterized in that blindhole-like recesses (65) for receiving elastomeric elements (66) are arranged parallel to the longitudinal axes (E) of the pump pistons (20, 21) and at the same time above the longitudinal axis of the motor (4) on two opposite sides (C, D) of the housing block (3b), in that a column (84) is connected to the housing block (3b) from a lower side (N), and in that the column (84) has at the bottom a blindhole-like recess (65) for receiving a third elastomeric element (66).

## Revendications

1. Dispositif de protection antiblocage (2, 2a) pour une installation hydraulique de freinage de véhicule, qui comprend un bloc de carter (3, 3a), avec des trous de raccordement (56, 58, 60, 61) de conduites de freinage et un volume d'excentrique (9) qui part d'un premier côté (A) du bloc de carter, avec un excentrique (13) monté de façon à pouvoir tourner autour d'un axe de rotation dans le volume d'excentrique (9), avec deux pistons de pompe (20, 21) d'éléments de pompe (22, 23), pistons qui ont le même axe et sont orientés de façon symétrique par rapport à l'excentrique (13) et peuvent coulisser, avec un moteur (4), qui sert à entraîner l'excentrique (13), le moteur (4) étant disposé avec le même axe par rapport à l'axe de rotation de l'excentrique (13) et fixé sur le premier côté du bloc de carter (A), un deuxième côté (B) de bloc de carter opposé au premier côté (A) de bloc de carter, deuxième côté (B) à partir duquel sont montés parallèlement à l'axe de rotation de l'excentrique (13) des distributeurs (51, 53, 80) que l'on peut commander électriquement pour modifier les pressions de freinage des roues, avec deux premières chambres d'accumulation (38, 39), qui se trouvent dans des premiers alésages (30, 31, 31') et qui servent à recevoir de façon transitoire un fluide sous pression pompé par les éléments de pompe (22, 23), avec des deuxièmes chambres d'accumulation (45, 46), qui se trouvent dans des seconds alésages (40, 41), les prolongements des axes longitudinaux (F, G, I, J) des premières chambres d'accumulation (38, 39) et des deuxièmes chambres d'accumulation (45, 46) étant orientés parallèlement et les axes longitudinaux (E) des pistons de pompe (20, 21) se coupant à angle droit, les prolongements des axes longitudinaux (F, G) des premières chambres d'accumulation (38, 39) ayant des premières distances (K) à partir des axes longitudinaux (E) des pistons de pompe (20, 21) et les axes longitudinaux (I, J) des deuxièmes chambres d'accumulation (45, 46) ayant des secondes distances (L) à partir des axes longitudinaux (E) des pistons de pompe (20, 21),
caractérisé en ce que
• le bloc de carter (3) présente sur le deuxième côté du bloc de carter (B) dans la zone des distributeurs (51, 53) une première surface verticale (73) avec une première distance horizontale par rapport à l'axe longitudinal commun (E) des pistons de pompe (20, 21) et en dessous de ceux-ci une deuxième surface (74) avec au moins une hauteur qui correspond à la hauteur des premières chambres d'accumulation (38, 39) avec une deuxième distance horizontale par rapport à l'axe longitudinal commun (E) des pistons de pompe (20, 21), qui est plus grande que la première distance,
• les axes longitudinaux (F, G) des premières chambres d'accumulation (38, 39) se trouvent dans un premier plan de référence et les axes longitudinaux (I, J) des deuxièmes chambres d'accumulation (45, 46) se trouvent dans un deuxième plan de référence, et
• une distance entre ces deux plans de référence dans les zones des chambres d'accumulation (38, 45, 39, 46) est au moins aussi grande que le diamètre de la plus petite quant au diamètre des chambres d'accumulation (38, 39, 45, 46).

2. Dispositif de protection antiblocage selon la revendication 1,
caractérisé en ce que
• les premières distances (K) sont égales entre elles et
• les secondes distances (L) sont égales entre elles.

3. Dispositif de protection antiblocage selon la revendication 1 ou 2,
caractérisé en ce que
les axes longitudinaux (E) des pistons de pompe (21, 22) se trouvent entre les axes longitudinaux (G, I) d'une première et d'une deuxième chambre d'accumulation (39).

4. Dispositif de protection antiblocage selon l'une des revendications 1 à 3,
caractérisé en ce que
une projection des axes longitudinaux (F, G, I, J) des quatre chambres d'accumulation (38, 39, 45, 46) détermine les quatre angles d'un quadrilatère symétrique.

5. Dispositif de protection antiblocage selon la revendication 4,
caractérisé en ce que
les quatre angles appartiennent à un rectangle.

6. Dispositif de protection antiblocage selon l'une des revendications 1 à 5,
caractérisé en ce que
• le côté (N) du bloc de carter (3), d'où partent les alésages (30, 31, 31', 41) forment un côté inférieur du bloc de carter (3), et
• des trous de raccordement aux canalisations de freinage (56, 58, 60, 61) se trouvent sur un côté supérieur (P) du bloc de carter (3).

7. Dispositif de protection antiblocage selon la revendication 6,
caractérisé en ce que
• le premier côté (A) du bloc de carter (3) présente une surface de fixation (70) associée au moteur (4) et
• en dessus du moteur (4) il y a une autre surface (71), qui est décalée par rapport à la surface de fixation (70) du moteur (4) de façon parallèle en direction d'une extrémité libre du moteur (4), et de laquelle partent d'autres trous de raccordement pour les conduites de freinage (57, 59).

8. Dispositif de protection antiblocage selon la revendication 7,
caractérisé en ce que
sur la face inférieure (74) on disposez un boîtier (5) pour recevoir des composants électriques et/ou électroniques.

9. Dispositif de maintien selon la revendication 7,
caractérisé en ce que
sur la face supérieure (73) on monte un capot de recouvrement (6) qui recouvre au moins des bobines électromagnétiques (54, 55) des distributeurs (51, 53).

10. Dispositif de protection antiblocage selon l'une des revendications 1 à 9,
caractérisé en ce que
parallèlement aux axes longitudinaux (E) des pistons de pompe (20, 21) et dans ce cas au dessus d'un axe longitudinal du moteur (4) le bloc de carter (3) présente sur deux côtés opposés (C, D) deux évidements et sur un côté inférieur (N) un autre évidement en forme de trou borgne (65) pour respectivement un élément élastique en caoutchouc (65) servant à accrocher le dispositif de protection antiblocage (2, 2a).

11. Dispositif de protection antiblocage selon la revendication 1,
caractérisé en ce que
le système de protection antiblocage (2a) est développé pour arriver à avoir un freinage automatique grâce à des distributeurs (80) montés en plus et qui peuvent être commandés électriquement, et à un bloc de carter (3a) constitué pour cela.

12. Dispositif de protection antiblocage selon la revendication 11,
caractérisé en ce que
parallèlement aux axes longitudinaux (E) des pistons de pompe (20, 21) et dans ce cas au dessus de l'axe longitudinal (8)à du moteur (4) on prévoit sur deux côtés opposés du bloc de carter (3a) des évidements en forme de trous borgnes (65) pour des éléments d'accrochage (66) élastiques en caoutchouc et en partant de la face inférieure (n) un autre évidement (65) pour un autre élément élastique en caoutchouc (66).

13. Dispositif de protection antiblocage selon l'une des revendications 1 à 9,
caractérisé en ce que
• parallèlement aux axes longitudinaux (E) des pistons de pompe (20, 21) et dans ce cas en dessus de l'axe longitudinal du moteur (4) on dispose sur deux côtés opposés (C.D.) du bloc de carter (3b) des évidements (65) en forme de trous borgnes pour recevoir des éléments élastiques en caoutchouc (66),
• en partant d'un coté inférieur (N) une colonne (84) est reliée au bloc de carter (3b) et
• la colonne (84), en dessous d'un évidement en forme de trou borgne, est équipée pour recevoir un troisième élément élastique en caoutchouc (66).
